# EUROPEAN PATENT APPLICATION

(11) **EP 1 840 838 A1**
(43) Date of publication of application: **03.10.2007**
(21) Application number: 07251105.8
(22) Date of filing: 15.03.2007
(51) Int. Cl.: G06T 11/20

(54) **Rendering apparatus, method and program, and shape data generation apparatus, method and program**

(30) Priority: 30.03.2006 JP 2006094358
(71) Applicant: KABUSHIKI KAISHA TOSHIBA, Tokyo 105-8001 (JP)
(72) Inventor: Sugita, Kaoru c/o Intellectual Property Division, Minato-ku Tokyo 105-8001 (JP); Mihara, Isao c/o Intellectual Property Division, Minato-ku Tokyo 105-8001 (JP)
(74) Representative: Granleese, Rhian Jane

(57) **Abstract**

Rendering apparatus includes means (101) for inputting vector graphics data, means (102) for computing shape feature quantity related to vector graphics data, means (103) for acquiring, as rendering parameters, position of shape on screen, and matrix indicating affine transformation to position, means (103) for computing number of pixels, first converting means (104) for converting vector graphics data into bitmap texture data when number of pixels is smaller than shape feature quantity, first rendering means (105) for rendering bitmap texture data, second converting means (106) for converting vector graphics data into polygon model data attached with a curve-parameter when the number of pixels fails to be smaller than shape feature quantity, second rendering means (107) for rendering polygon model data, means (103) for selecting one of first and second converting means and one of first and second rendering means by comparing number of pixels with shape feature quantity, and means (108) for presenting selected one of rendered bitmap texture data and rendered polygon model data.

## Description

The present invention relates to an image rendering apparatus, method and program, and a shape data generation apparatus, method and program.

In accordance with the progress of high definition (HD), it is considered that the necessity of techniques for efficiently rendering high-quality vector graphics data or outline font object in a Computer Graphics (CG) image of high definition will be increased.

A method for efficiently rendering vector graphics object using a graphics processing unit (GPU) as a graphics LSI has been published by, for example, C. Loop and J. Blinn, "Resolution Independent Curve Rendering using Programmable Graphics Hardware," In Proc. of ACM SIGGRAPH2005, pp.1000-1009. In this method, rendering of a closed curve formed of two types of outlines, i.e., a line segment outline and quadratic Bezier curve outline, is executed using the GPU, based on the fact that inside/outside determination as to the quadratic Bezier curves can be executed in units of pixels by a pixel shader incorporated in the GPU. More specifically, the closed curve is divided into a portion formed of a single quadratic Bezier curve, and an outline portion formed of only a linear line and no curves, and the linear outline portion is rendered using triangle division. The inside/outside determination as to the quadratic Bezier curve executed in units of pixels using the pixel shader enables rendering of a smooth curve regardless of display resolution.

However, when characters of outline fonts are displayed using the above method, it is necessary to render several tens to several hundreds of triangular polygons for each character. If all characters displayed on the screen are rendered using this method, it is necessary to render too many triangular polygons. This inevitably reduces the rendering efficiency.

Further, when a reduced image of a character of a large stroke count is displayed, the linear lines of a plurality of triangular polygons are rendered in each pixel, with the result that aliasing occurs and a character hard to make out is produced. Similar problems may well occur in the case of general graphics object, too.

In accordance with a first aspect of the invention, there is provided a rendering apparatus comprising: a shape data input unit configured to input vector graphics data; a feature quantity computation unit configured to compute a shape feature quantity related to the vector graphics data, the shape feature quantity indicating complexity of a shape represented by the vector graphics data, or indicating complexity of a character represented by the shape of the vector graphics data; an acquisition unit configured to acquire, as a plurality of rendering parameters, a position of the shape on a screen, and a matrix indicating affine transformation to the position; a pixel number computation unit configured to compute number of pixels which are included in a rendering region of the shape, based on the rendering parameters; a first conversion unit configured to convert the vector graphics data into bitmap texture data when the number of pixels is smaller than the shape feature quantity; a first rendering unit configured to render the bitmap texture data; a second conversion unit configured to convert the vector graphics data into polygon model data attached with a curve-parameter when the number of pixels fails to be smaller than the shape feature quantity; a second rendering unit configured to render the polygon model data; a selection unit configured to select one of the first conversion unit and the second conversion unit and one of the first rendering unit and the second rendering unit according to the input vector graphics data by comparing the number of pixels with the shape feature quantity; and a presentation unit configured to present a selected one of the rendered bitmap texture data and the rendered polygon model data.

In accordance with a second aspect of the invention, there is provided a shape data generation apparatus comprising: a shape data input unit configured to input vector graphics data; a feature quantity computation unit configured to compute a shape feature quantity related to the vector graphics data, the shape feature quantity indicating complexity of a shape represented by the vector graphics data, or indicating complexity of a character represented by the shape of the vector graphics data; a first conversion unit configured to convert the vector graphics data into bitmap texture data; a second conversion unit configured to convert the vector graphics data into polygon model data attached with a curve-parameter; and a generation unit configured to generate structured shape data by structuring, as one set, the shape feature quantity, the bitmap texture data and the polygon model data.

In accordance with a third aspect of the invention, there is provided a rendering apparatus comprising: a character string input unit configured to input a text character string; a storage unit configured to store character code data and outline font data in relation to each other; a shape data generation unit configured to generate vector graphics data as outline font data corresponding to the text character string, referring to the storage unit; a feature quantity computation unit configured to compute a shape feature quantity related to the vector graphics data, the shape feature quantity indicating complexity of a shape represented by the vector graphics data, or indicating complexity of a character represented by the shape of the vector graphics data; an acquisition unit configured to acquire, as a plurality of rendering parameters, a position of the shape on a screen, and a matrix indicating affine transformation to the position; a pixel number computation unit configured to compute number of pixels which are included in a rendering region of the shape, based on the rendering parameters; a first conversion unit configured to convert the vector graphics data into bitmap texture data when the number of pixels is smaller than the shape feature quantity; a first rendering unit configured to render the bitmap texture data; a second conversion unit configured to convert the vector graphics data into polygon model data attached with a curve-parameter when the number of pixels fails to be smaller than the shape feature quantity; a second rendering unit configured to render the polygon model data; a selection unit configured to select a one of the first conversion unit and the second conversion unit and one of the first rendering unit and the second rendering unit according to the vector graphics data by comparing the number of pixels with the shape feature quantity; and a presentation unit configured to present a selected one of the rendered bitmap texture data and the rendered polygon model data.

In accordance with a fourth aspect of the invention, there is provided a shape data generation apparatus comprising: a character string input unit configured to input a text character string; a storage unit configured to store character code data and outline font data in relation to each other; a shape data generation unit configured to generate vector graphics data as the outline font data corresponding to the text character code string, referring to the storage unit; a feature quantity computation unit configured to compute a shape feature quantity related to the vector graphics data, the shape feature quantity indicating complexity of a shape represented by the vector graphics data, or indicating complexity of a character represented by the shape of the vector graphics data; a first conversion unit configured to convert the vector graphics data into bitmap texture data; a second conversion unit configured to convert the vector graphics data into polygon model data attached with a curve-parameter; and a generation unit configured to generate structured shape data by structuring, as one set, the shape feature quantity, the bitmap texture data and the polygon model data.

In accordance with a second aspect of the invention, there is provided a shape data generation apparatus comprising: a character code input unit configured to input a character code; a storage unit configured to store character codes and outline font data items in relation to each other; a shape data generation unit configured to generate vector graphics data as outline font data corresponding to the input character code, referring to the storage unit; a feature quantity computation unit configured to compute a shape feature quantity related to the vector graphics data, the shape feature quantity indicating complexity of a shape represented by the vector graphics data, or indicating complexity of a character represented by the shape of the vector graphics data; a first conversion unit configured to convert the vector graphics data into bitmap texture data; a second conversion unit configured to convert the vector graphics data into polygon model data attached with a curve-parameter; and a structured font shape data generation unit configured to generate structured font shape data by structuring, as one set, the input character code, the shape feature quantity, the bitmap texture data and the polygon model data.

The invention can be more fully understood from the following detailed description when taken in conjunction with the accompanying drawings, in which:
FIG. 1 is a block diagram illustrating a rendering apparatus according a first embodiment of the invention;
FIG. 2 is a view illustrating vector graphics shape data input by the input unit appearing in FIG. 1;
FIG. 3 is a flowchart illustrating an operation example of the shape feature quantity computation unit appearing in FIG. 1;
FIG. 4 is a flowchart illustrating a process example for computing the number of intersections between a linear line and the outlines of vector graphics shape data, using the shape feature quantity computation unit appearing in FIG. 1;
FIG. 5 is a flowchart illustrating another process example for computing the number of intersections between a linear line and the outlines of vector graphics shape data, using the shape feature quantity computation unit appearing in FIG. 1;
FIG. 6 is a view illustrating rendering parameter examples input to the rendering method selection unit appearing in FIG. 1;
FIG. 7 is a flowchart illustrating an operation example of the rendering method selection unit appearing in FIG. 1;
FIG. 8 is a flowchart illustrating an operation example of the curve-parameter attached polygon model generation unit appearing in FIG. 1;
FIG. 9 is a view useful in explaining a method for filling a convex Bezier region and concave Bezier region, using the curve-parameter attached polygon model rendering unit;
FIG. 10 is a block diagram illustrating a shape data generation apparatus according a second embodiment;
FIG. 11 is a view illustrating an example of structured vector graphics shape data;
FIG. 12 is a view useful in explaining that a single vector graphics object is formed of structured vector graphics data;
FIG. 13 is a block diagram illustrating an image data output apparatus according to the second embodiment;
FIG. 14 is a block diagram illustrating a rendering apparatus according to a third embodiment;
FIG. 15 is a flowchart illustrating an operation example of the vector graphics shape generation unit appearing in FIG. 14;
FIG. 16 is a block diagram illustrating a shape data generation apparatus according a fourth embodiment;
FIG. 17 is a block diagram illustrating a shape data generation apparatus according a fifth embodiment;
FIG. 18 is a view illustrating an example of structured font shape data output from the output unit appearing in FIG. 17;
FIG. 19 is a block diagram illustrating a rendering apparatus according to a sixth embodiment; and
FIG. 20 is a block diagram illustrating a rendering apparatus according to a seventh embodiment.

Rendering apparatuses, methods and programs, and shape data generation apparatuses, methods and programs according to embodiments of the invention will now be described in detail with reference to the accompanying rendering.

Firstly, a rough description will be given of the rendering apparatuses, methods and programs, and shape data generation apparatuses, methods and programs according to embodiments. The embodiments propose rendering apparatuses, methods and programs, and shape data generation apparatuses, methods and programs, in which the method proposed in C. Loop and J. Blinn, "Resolution Independent Curve Rendering using Programmable Graphics Hardware," In Proc. of ACM SIGGRAPH2005, pp.1000-1009 (hereinafter referred to as the "polygon model rendering method"), and a method for displaying a texture in which vector graphics data is beforehand rendered in a bitmap (hereinafter referred to as the "texture rendering method") are selectively used as a vector graphics rendering method.

In the embodiments, the shape of to-be-rendered vector graphics data or shape feature quantities indicating the complexity of a to-be-rendered character expressed as a vector graphics shape is beforehand computed, and it is determined which one of the above-mentioned rendering methods should be used, based on the result of comparison of the shape feature quantities and the parameters used during rendering.

This enables the number of polygons needed for rendering and to be reduced, and high interactivity to be achieved. Further, when a reduced image of a character of a large stroke count is displayed, a texture mapping method is utilized to prevent the character from becoming hard to make out.

The rendering apparatuses, methods and programs, and shape data generation apparatuses, methods and programs according to the invention can provide a clearly rendered image using a small number of polygons.

The rendering apparatuses of the embodiments are expected to be installed in next-generation graphics processing engines, or middleware for executing vector graphics display.

### (First Embodiment)

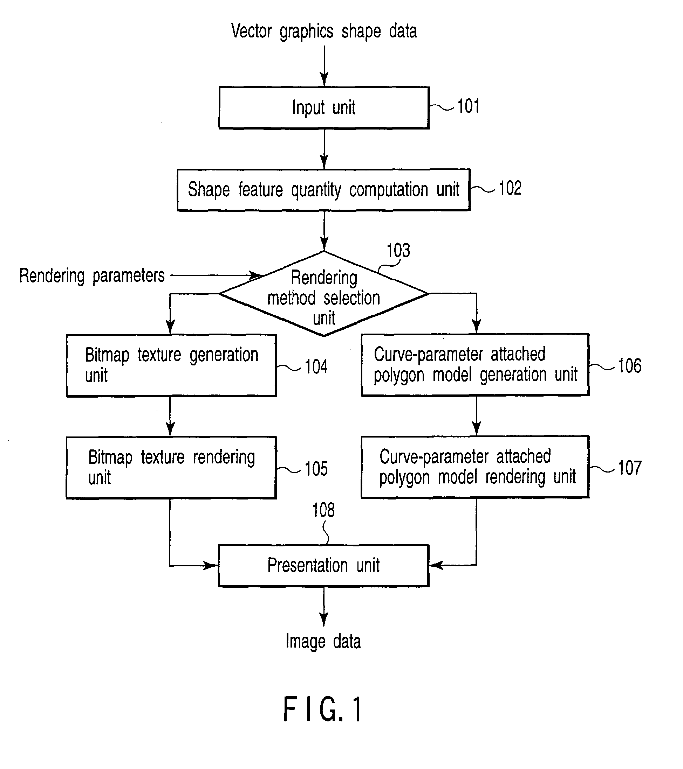

Referring to FIG. 1, a rendering apparatus according to a first embodiment of the invention will be described. FIG. 1 is a view useful in explaining the configuration of the rendering apparatus of the first embodiment. This apparatus obtains vector graphics shape data and rendering parameters, and outputs image data as the result of vector graphics rendering.

As shown in FIG. 1, the rendering apparatus of the first embodiment comprises an input unit 101, shape feature quantity computation unit 102, rendering method selection unit 103, bitmap texture generation unit 104, bitmap texture rendering unit 105, curve-parameter attached polygon model generation unit 106, curve-parameter attached polygon model rendering unit 107 and presentation unit 108.

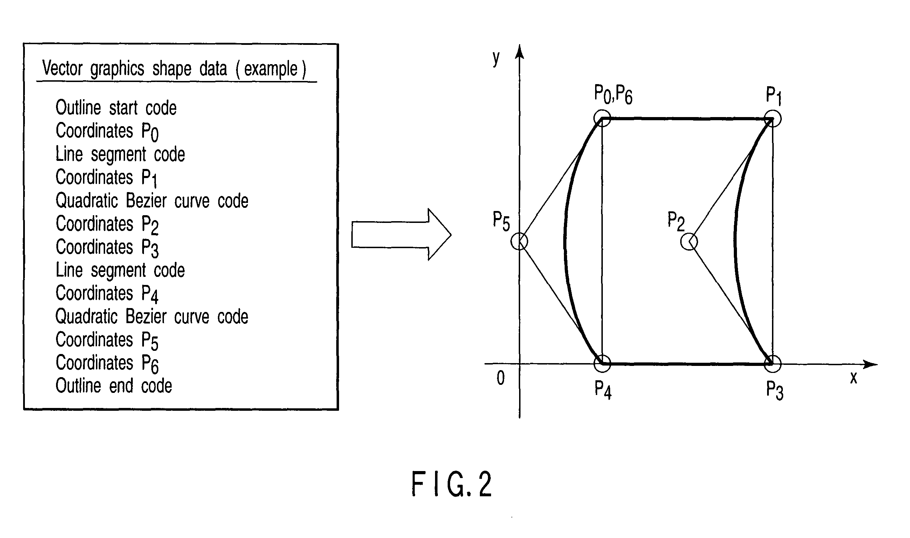

The input unit 101 permits vector graphics shape data to be input. The vector graphics shape data will be described later with reference to FIG. 2.

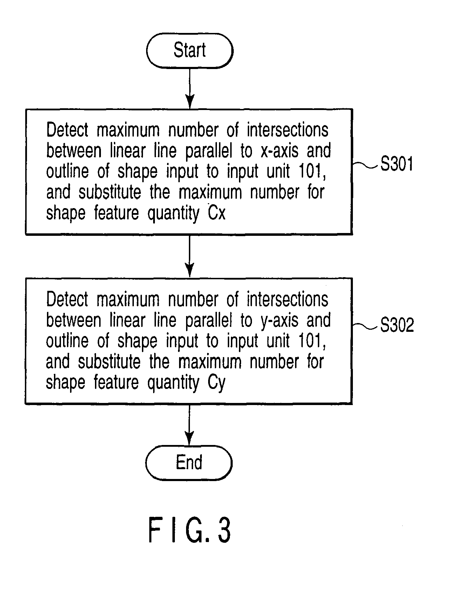

The shape feature quantity computation unit 102 computes the shape feature quantities of the shape data input by the input unit. The unit 102 will be described later in detail with reference to FIGS. 3, 4 and 5.

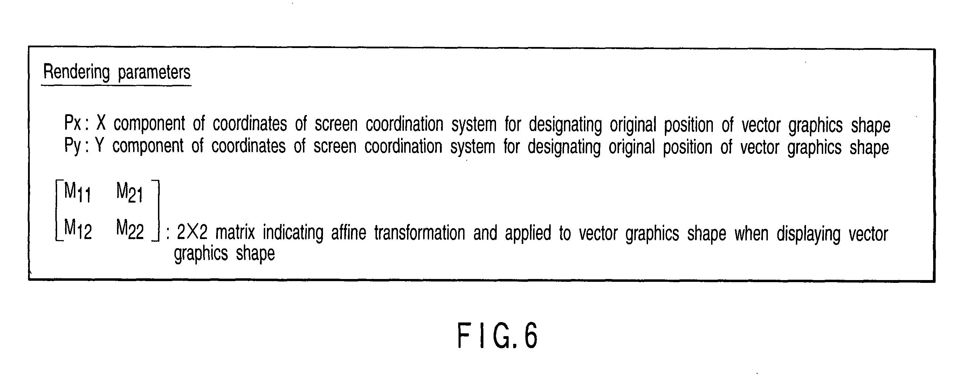

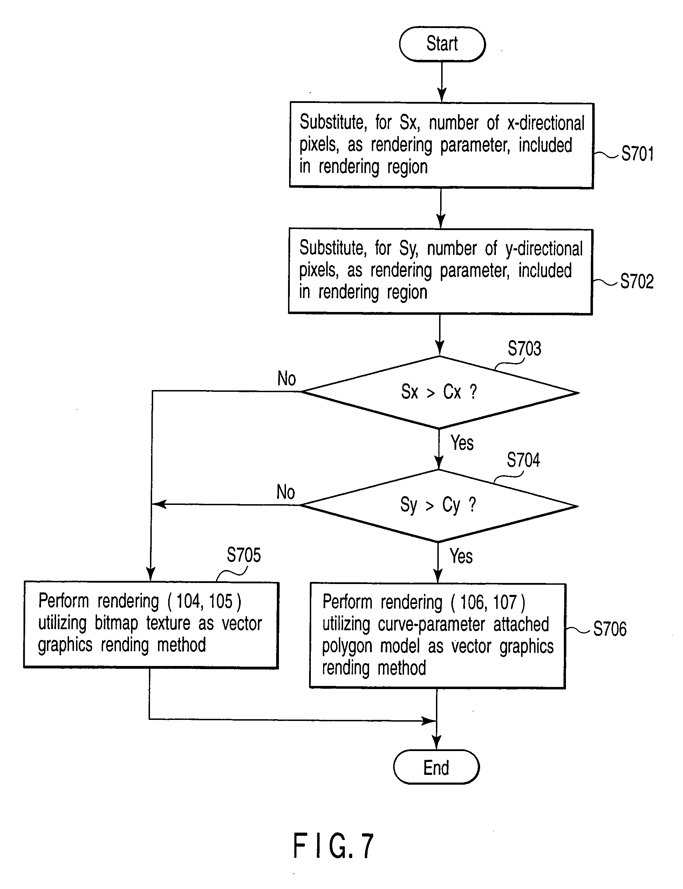

The rendering method selection unit 103 obtains rendering parameters and shape feature quantities, compares them, and selects one of the polygon model rendering method and texture rendering method to render the vector graphics shape data. The rendering parameters will be described later with reference to FIG. 6. The rendering method selection unit 103 will be described later in detail with reference to FIG. 7.

The bitmap texture generation unit 104 converts the vector graphics shape data into bitmap texture data. The bitmap texture generation unit 104 secures a texture memory (not shown) of the size determined from, for example, a maximum number of intersections between the lines parallel to the x-axis and the outline of the graphics shape data, and a maximum number of intersections between the lines parallel to the y-axis and the outline of the graphics shape data, and converts the graphics shape data into bitmap texture data.

The bitmap texture rendering unit 105 renders the bitmap texture data generated by the bitmap texture generation unit 104 at a designated position. The designate position is, for example, (Px, Py) in FIG. 6.

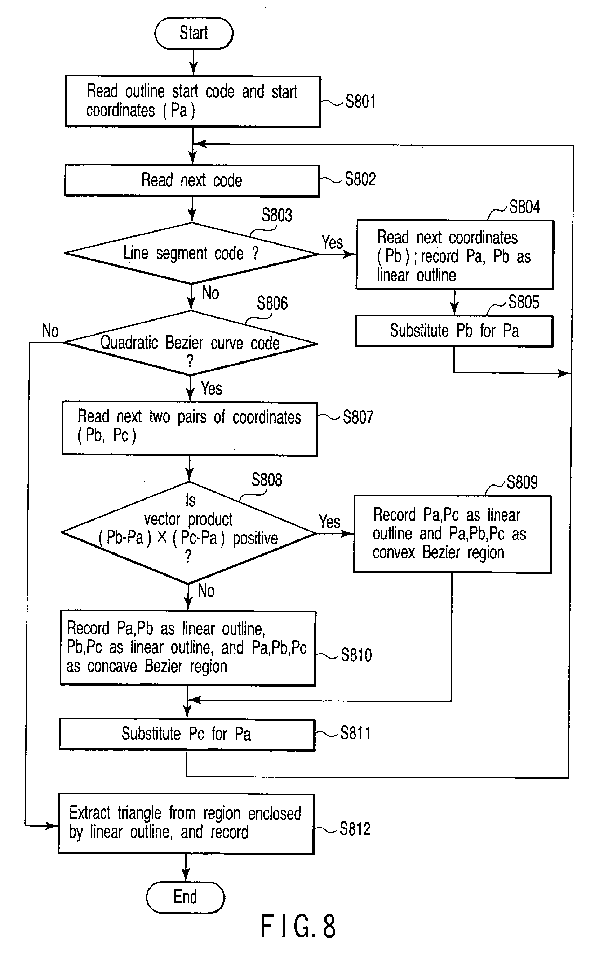

The curve-parameter attached polygon model generation unit 106 converts the graphics shape data into polygon model data with curve parameters. The curve-parameter attached polygon model generation unit 106 will be described later in detail with reference to FIG. 8.

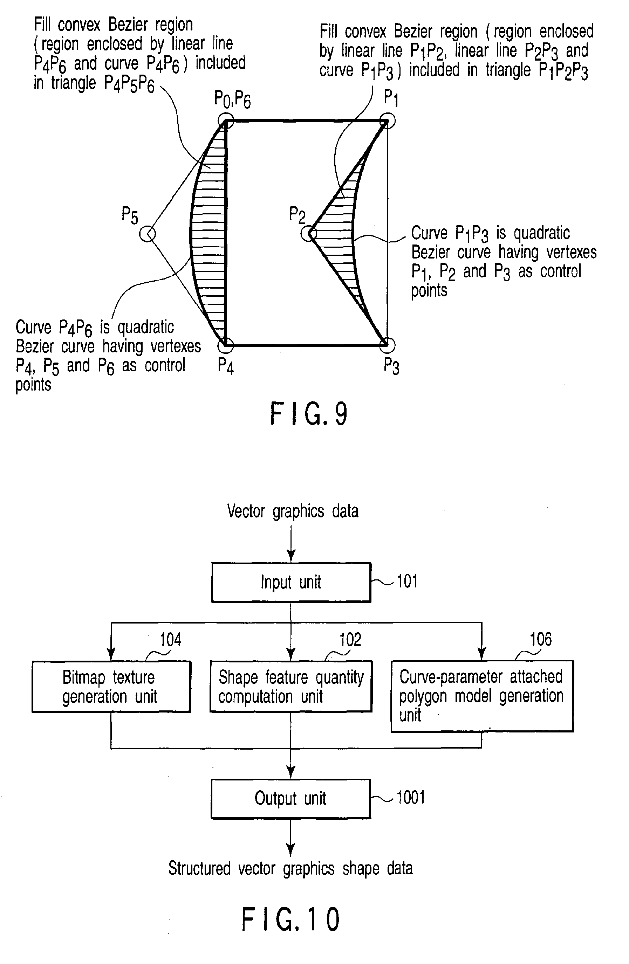

The curve-parameter attached polygon model rendering unit 107 renders the polygon model data with curve parameters generated by the curve-parameter attached polygon model generation unit 106. The curve-parameter attached polygon model rendering unit 107 will be described later in detail with reference to FIG. 9.

The presentation unit 108 presents the image data rendered by the bitmap texture rendering unit 105 or curve-parameter attached polygon model rendering unit 107.

Referring to FIG. 2, a description will be given of an example of the vector graphics shape data input by the input unit 101. As shown in the left portion of FIG. 2, the vector graphics shape data contains, for example, an outline start code, line-segment code, quadratic Bezier curve code, outline end code, and coordinates. Further, as shown in the right portion of FIG. 2, the vector graphics shape data indicates a closed curve formed by connecting linear lines and curves.

Referring to FIG. 3, an operation example of the shape feature quantity computation unit 102 of FIG. 1 will be described.

Firstly, a maximum number of intersections, input by the input unit 101, between the lines parallel to the x-axis and the outline of the graphics shape data are detected, and the maximum number is substituted for the feature quantity Cx of the shape data (step S301). Subsequently, a maximum number of intersections, input by the input unit 101, between the lines parallel to the y-axis and the outline of the graphics shape data are detected, and the maximum number is substituted for the feature quantity Cy of the shape data (step S302) . In the example of FIG. 2, Cx = 2 and Cy = 4.

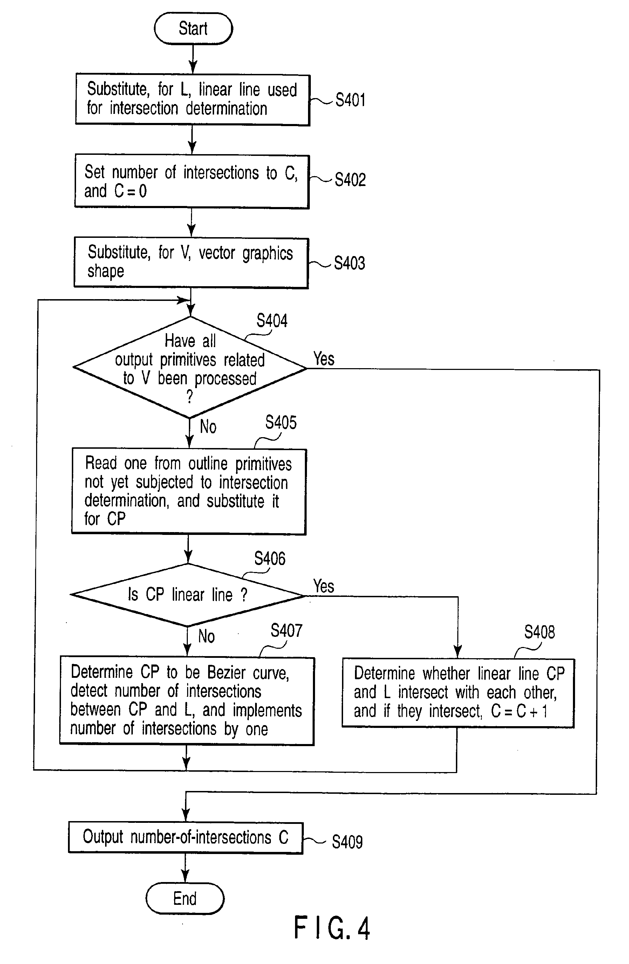

Referring to FIG. 4, a description will be given of an operation example of the shape feature quantity computation unit 102 of FIG. 1 performed to detect the number of intersections. FIG. 4 is a flowchart for detecting the number of intersections between the lines parallel to the x-axis and outline of shape, and that of intersections between the lines parallel to the y-axis and outline of shape.

Firstly, the line parallel to the x-axis or y-axis is set to L (step S401). Subsequently, the number C (C = Cx or Cy) of intersections is initialized to 0 (step S402). After that, vector graphics shape data is set to V (step S403). Processing (intersection determination) is performed on all outline primitives (linear lines or curves) related to V (step S404). If there remain outline primitives that are not yet subjected to intersection determination, one of these outline primitives is read and set to CP (step S405). It is determined whether CP is a linear line (step S406). If it is determined to be a linear line, an intersection determination is performed on the linear line CP and liner line L. If they intersect each other, the number of C is incremented by one (step S408). In contrast, if CP is not a linear line, CP is regarded as a Bezier curve, and the number of intersections between the Bezier curve CP and linear line L is determined, whereby the determined number of intersections is added to C (step S407). After the intersection determination is performed on all outline primitives, the number C of intersections is output (step S409).

### <Method for replacing an intersection determination concerning the Bezier curve and linear line with an intersection determination concerning the linear line and the polygon obtained by connecting the control points of the Bezier curve>

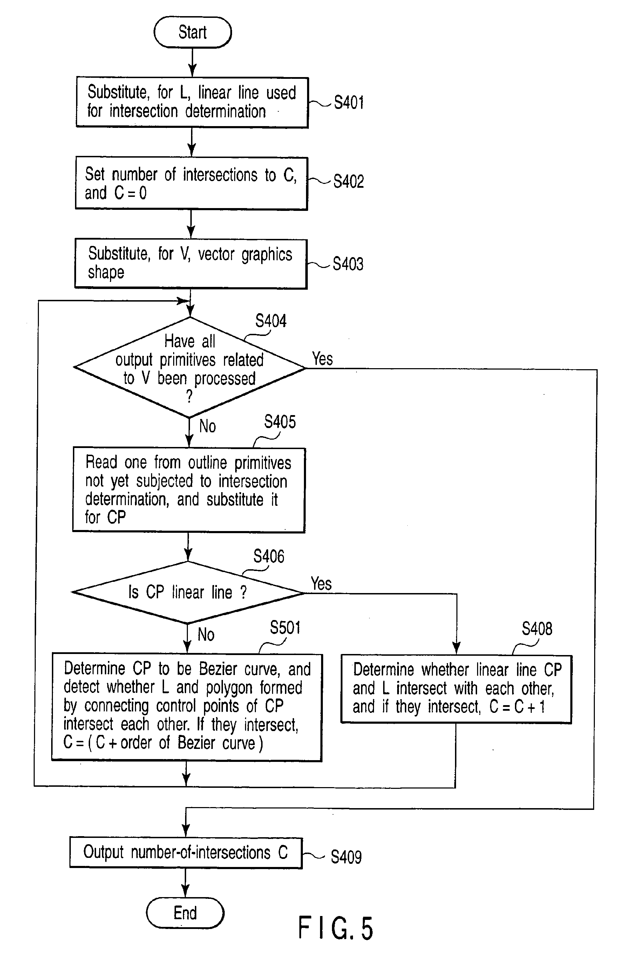

Step S501 in FIG. 5 may be executed instead of step S407 in FIG. 4. At step S501 in FIG. 5, an intersection determination concerning the linear line and the polygon obtained by connecting the control points of the Bezier curve is performed. If the polygon intersects the linear line, the order of the Bezier curve is added to the number of intersections. The intersection determination concerning the sides of a polygon and a linear line is more advantageous than that concerning a curve and a linear line in that the former requires a smaller number of computations. In the example of FIG. 2, Cx = 2 and Cy = 4.

Referring to FIG. 6, a description will be given of examples of rendering parameters input to the rendering method selection unit 103. FIG. 6 shows the data structure of the rendering parameters.

The rendering parameters include, for example, a position on the screen, and a matrix indicating rotation and scaling (affine transformation) with reference to the position. In FIG. 6, Px and Py indicate the position on the screen, and a 2 × 2 matrix indicates the affine transformation.

Referring to FIG. 7, an operation example of the rendering method selection unit 103 of FIG. 1 will be described. FIG. 7 shows the process performed by the rendering method selection unit 103.

Assume here that the shape of vector graphics data is defined in the region of 0 ≤ x ≤ xm, 0 ≤ y ≤ ym, and that the vector graphics data shape is deformed using the affine transformation matrix M of the rendering parameters shown in FIG. 6.

The number Sx of pixels arranged in the x-axis direction of the rendering region, Sx = |M₁₁xm| + |M₂₁ym|, is computed (step S701). The mark | | indicates the absolute value. Further, "M₁₁xm" indicates "M₁₁" × xm. Similarly, The number Sy of pixels arranged in the y-axis direction of the rendering region,
Sy = |M₂₁xm| + |M₂₂ym|, is computed (step S702). Subsequently, Sx and Sy are compared with Cx and Cy acquired by the shape feature quantity computation unit 102, respectively (steps S703 and S704). If the condition of Sx > Cx or Sy > Cy is not satisfied, bitmap texture rendering is used as the vector graphics rendering method and performed by the units 104 and 105 (step S705). If the condition of Sx > Cx and Sy > Cy is satisfied, rendering using polygon model data with curve parameters is used as the vector graphics rendering method and performed by the units 106 and 107 (step S706).

Further, if the process of FIG. 7 is not executed in units of frames, but the rendering method selection unit 103 uses the result of selection performed in the preceding frame as the results of selection of the subsequent several frames, the number of executions of the process can be reduced.

Referring then to FIG. 8, an operation example of the curve-parameter attached polygon model generation unit 106 shown in FIG. 1 will be described. FIG. 8 illustrates the process performed by the curve-parameter attached polygon model generation unit 106. In this process, outline information and coordinates are sequentially read to thereby output a triangular region.

Firstly, the start code of outline data is read, and the start coordinates are read and set to Pa (step S801). Subsequently, the next code is read (step S802). It is determined whether the next code is a line-segment code that indicates a line-segment outline (step S803). If it is a line-segment code, the successively defined coordinates are read and set to Pb, whereby line segment PaPb is recorded as the outline of a linear portion (step S804). After that, Pb is substituted for Pa (step S805) and the program returns to step S802. If it is determined at step S803 that the next code is not a line-segment code, it is determined whether the next code is a quadratic Bezier code (step S806). If the next code is a quadratic Bezier code, the successively defined two pairs of coordinates are set to Pb and Pc (step S807). The outer product (Pb - Pa) x (Pc - Pa) of vectors PbPa and PcPa is computed (step S808). If the outer product is a positive value, line segment PaPc is recorded as the outline of another linear portion, and triangle PaPbPc is added as a convex Bezier region to curve-parameter attached polygon model data (step S809). Thereafter, Pc is substituted for Pa (step S811), and the program returns to step S802.

If it is determined at step S808 that the outer product is a negative value, line segment PaPb is recorded as the outline of a linear portion, and then line segment PbPc is recorded as the outline of another linear portion, and triangle PaPbPc is added as a concave Bezier region to the curve-parameter attached polygon model data (step S810). Thereafter, Pc is substituted for Pa (step S811), and the program returns to step S802.

Unless the code read at step S806 is a quadratic Bezier curve code, it is determined to be an outline end code, whereby a triangle is extracted from the interior of the outline recorded as a linear outline, and the extracted triangle is set as a triangular region and is added to the curve-parameter attached polygon model data (step S812).

The curve-parameter attached polygon model rendering unit 107 fills the interior of part of the triangular region included in the curve-parameter attached polygon model data output by the curve-parameter attached polygon model generation unit 106. Specifically, the regions recorded as a convex Bezier region and concave Bezier region, which are included in the curve-parameter attached polygon model data, are filled as shown in FIG. 9.

The curve-parameter attached polygon model rendering unit 107 inputs, for example, texture coordinates P4, P5 and P6 in FIG. 9 to a pixel shader, thereby acquiring a quadratic Bezier curve.

Note that the curve-parameter attached polygon model generation unit 106 and curve-parameter attached polygon model rendering unit 107 perform processing utilizing the method disclosed in C. Loop and J. Blinn, "Resolution Independent Curve Rendering using Programmable Graphics Hardware," In Proc. of ACM SIGGRAPH2005, pp.1000-1009.

### <Method for Explicitly Designating Selected Rendering method>

FIG. 1 shows an apparatus that can automatically switch two rendering methods in accordance with the shape of vector graphics data and the rendering size, using the shape feature quantity computation unit 102 and rendering method selection unit 103. However, a device (not shown) may be further employed which explicitly designates, from the outside of the apparatus, which one of the two rendering methods should be used.

For instance, information designating an appropriate rendering method may be input to the apparatus from the outside, depending upon whether a certain graphics shape is displayed as a close view or distant view. Namely, if the certain vector graphics shape is displayed as a close view, the rendering method employed in the curve-parameter attached polygon model generation unit 106 and curve-parameter attached polygon model rendering unit 107 is utilized. In contrast, if the certain vector graphics shape is displayed as a distant view, the rendering method employed in the bitmap texture generation unit 104 and bitmap texture rendering unit 105 is utilized.

In addition, it is possible to employ a method for switching the rendering method in accordance with the distance between the display position of vector graphics data and that of a mouse cursor. The display position of the mouse cursor is operated by, for example, a user.

### <Method for Computing the Feature Quantity of Vector Graphics Data>

Since vector graphic data has a shape defined by the outline of a closed curve, the number of outline primitives forming an outline, the length of the outline, the number of vertices and the number of line segments, etc., can be used as feature quantities, as well as the number of intersections between a linear line and outline. In accordance with the feature quantity used, the process content of the shape feature quantity computation unit 102 and rendering method selection unit 103 varies.

### <Advantage of the Embodiment>

In the embodiment, the complexity of the shape of a to-be-rendered object is beforehand acquired as a feature quantity. When an image is rendered in a frame memory with a small number of pixels, bitmap texture produced by rendering a vector graphics shape in a frame memory with a sufficient memory capacity is displayed (using the units 104 and 105), instead of employing the method (using the units 106 and 107) disclosed in C. Loop and J. Blinn, "Resolution Independent Curve Rendering using Programmable Graphics Hardware," In Proc. of ACM SIGGRAPH2005, pp.1000-1009. This can avoid the problem that rendering is executed such that one pixel contains outlines of polygons, whereby a character hard to make out is produced.

Further, the rendering method disclosed in C. Loop and J. Blinn, "Resolution Independent Curve Rendering using Programmable Graphics Hardware," In Proc. of ACM SIGGRAPH2005, pp.1000-1009 requires a larger number of polygons for rendering and hence costs more than the rendering method utilizing texture, although it can provide higher quality display. Therefore, if the former method is utilized only for the shape to be displayed with high display quality, the processing cost of displaying a large number of vector graphics shapes can be reduced without degrading the quality of display, thereby enhancing the interactivity.

### (Second Embodiment)

An image rendering apparatus according to a second embodiment comprises a shape data generation apparatus and image data output apparatus separate therefrom. The shape data generation apparatus receives vector graphics shape data, and outputs structured vector graphics shape data before rendering the vector graphics shape data. The image data output apparatus receives the output structured vector graphics shape data and rendering parameters, and outputs image data as a result of vector graphics shape rendering.

Referring to FIGS. 10, 11 and 12, the shape data generation apparatus employed in the second embodiment will be described.

The shape data generation apparatus comprises an input unit 101, shape feature quantity computation unit 102, bitmap texture generation unit 104, curve-parameter attached polygon model generation unit 106 and output unit 1001. In the description below, elements similar to the above-described ones are denoted by corresponding reference numbers, and no detailed description is given thereof.

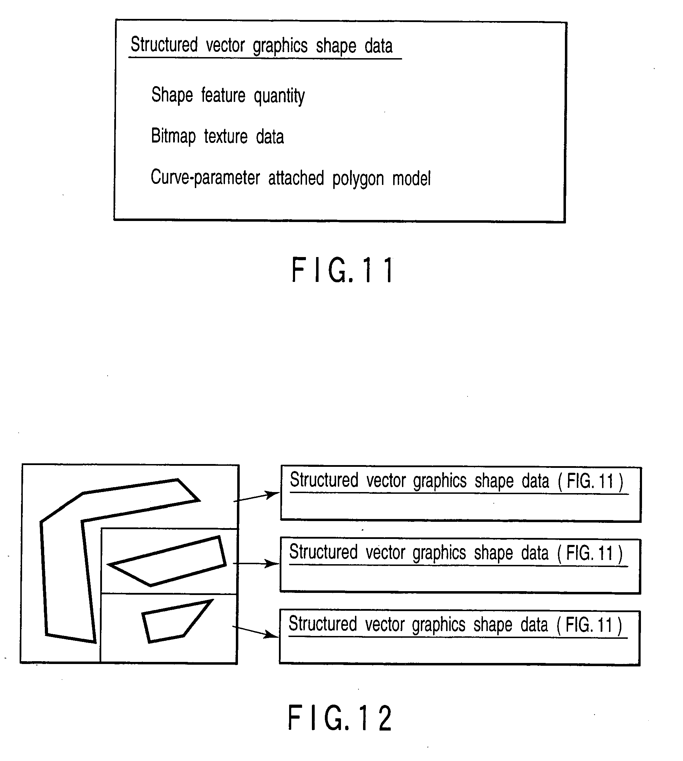

The output unit 1001 receives the shape feature quantity computed by the shape feature quantity computation unit 102, the bitmap texture data generated by the bitmap texture generation unit 104, and the curve-parameter attached polygon model generated by the curve-parameter attached polygon model generation unit 106, and outputs such structured vector graphics shape data as shown in FIG. 11.

When a plurality of vector graphics objects exist in one frame as shown in FIG. 12, the output unit 1001 outputs structured vector graphics shape data items in relation to the respective vector graphics objects. In this case, the shape feature quantity computation unit 102 computes shape feature quantities corresponding to the respective vector graphics objects.

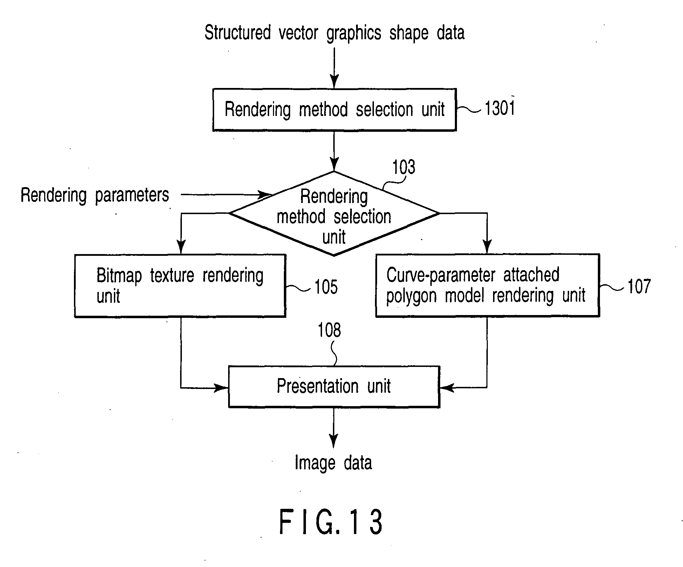

Referring to FIG. 13, the image data output apparatus employed in the second embodiment will be described. The image data output apparatus receives the structured vector graphics shape data defined as shown in FIG. 11, and outputs image data as a result of vector graphics rendering.

The image data output apparatus of the second embodiment comprises an input unit 1301, rendering method selection unit 103, bitmap texture rendering unit 105, curve-parameter attached polygon model rendering unit 107 and presentation unit 108.

The input unit 1301 receives structured vector graphics shape data and transfers a shape feature quantity corresponding to the data to the rendering method selection unit 103. Based on the determination result of the rendering method selection unit 103, bitmap texture data is transferred to the bitmap texture rendering unit 105, or curve-parameter attached polygon model data is transferred to the curve-parameter attached polygon model data rendering unit 107.

When a single vector graphics shape is defined as a plurality of structured vector graphics data items as shown in FIG. 12, different rendering units (105, 107) may be selected for different component regions.

In an interactive system that displays images of several to several tens of frames per one second, there is a case where it is desirable to separate a pre-process in which a model shape is defined beforehand, from a rendering process in which the defined model shape is displayed. The second embodiment is directed to the case of realizing the first embodiment as an interactive system, in which the pre-process and rendering process are separate from each other.

### (Third Embodiment)

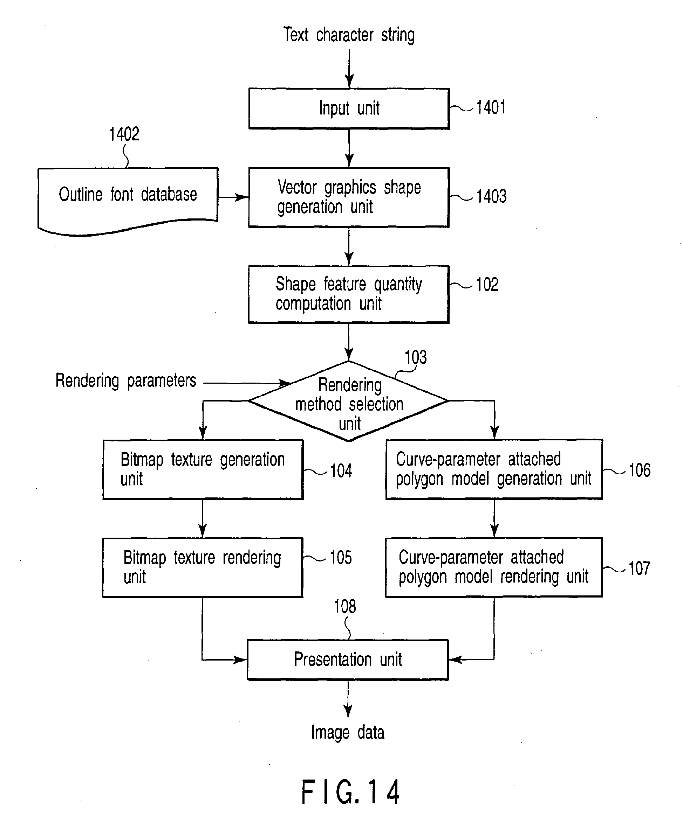

Referring to FIG. 14, a rendering apparatus according to a third embodiment will be described. The third embodiment is directed to, for example, an apparatus that receives a text character string, and outputs image data indicating the results of rendering of outline fonts corresponding to the text character string.

The rendering apparatus of the third embodiment comprises an input unit 1401, outline font database 1402, vector graphics shape generation unit 1403, shape feature quantity computation unit 102, rendering method selection unit 103, bitmap texture generation unit 104, bitmap texture rendering unit 105, curve-parameter attached polygon model generation unit 106, curve-parameter attached polygon model rendering unit 107 and presentation unit 108.

The input unit 1401 receives a text character string, and transfers the characters, included in the string, to the vector graphics shape generation unit 1403 one by one.

The outline font database 1402 outputs shape data of each outline font, using a character code as an argument.

The vector graphics shape generation unit 1403 generates shape data of outline fonts corresponding to the respective characters included in a text character string.

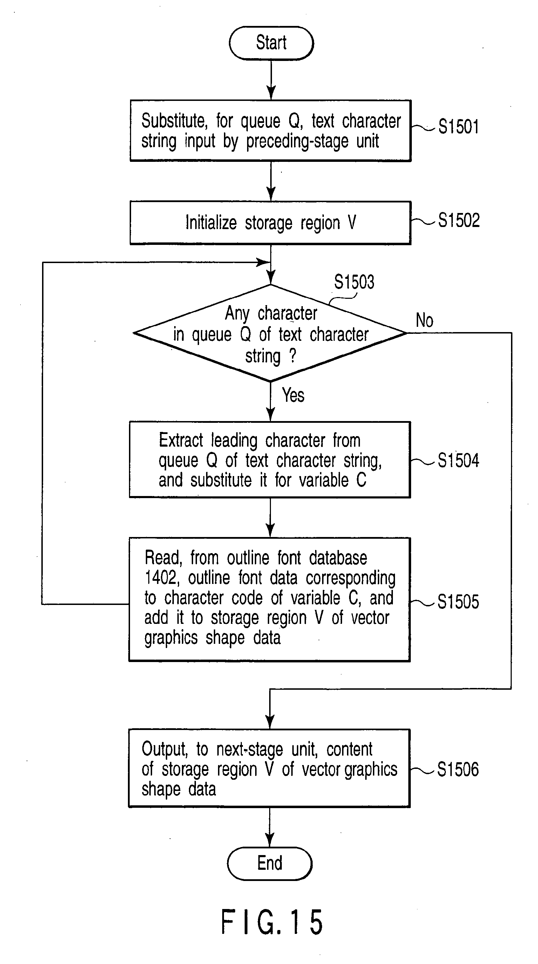

Referring to FIG. 15, an operation example of the vector graphics shape generation unit 1403 of FIG. 14 will be described. FIG. 15 illustrates the process performed by the vector graphics shape generation unit 1403. In this process, outline font vector graphics shape data is generated from the text character string input by the input unit 1401.

Firstly, a text data string from the unit of the previous stage is substituted for a queue Q (step S1501). Subsequently, a storage region V for vector graphics shape data is initialized (step S1502). It is determined at step S1503 whether one or more characters exist in the queue Q. If one or more characters exist, the leading character (code) is extracted and substituted for a variable C (step S1504). After that, outline font data corresponding to the character code of the variable C is read from the outline font database 1402, and is added to the storage region V, followed by the program returning to step S1503 (step S1505). If it is determined at step S1503 that there is no more character in the queue Q, the content of the storage region V is output to the unit of the next stage (bitmap texture generation unit 104, curve-parameter attached polygon model generation unit 106) (step S1506).

### <Advantage of the Third Embodiment>

Since outline fonts are also vector graphics shapes, the third embodiment can also use, for character rendering, the rendering method selection unit employed in the first embodiment.

### (Fourth Embodiment)

A fourth embodiment is directed to a shape data generation apparatus for receiving a text character string, and outputting such structured vector graphics shape data as defined in FIG. 11, before rendering outline font shapes corresponding to the text character string.

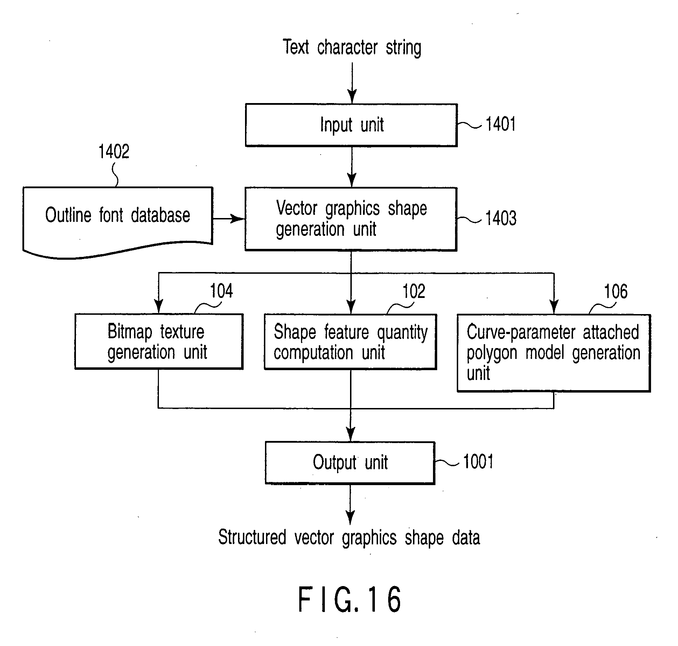

As shown in FIG. 16, the shape data generation apparatus of the fourth embodiment comprises an input unit 1401, outline font database 1402, vector graphics shape generation unit 1403, shape feature quantity computation unit 102, bitmap texture generation unit 104, curve-parameter attached polygon model generation unit 106 and output unit 1001.

The process performed by the fourth embodiment corresponds to a pre-process performed when the third embodiment is realized as an interactive system.

### (Fifth Embodiment)

A fifth embodiment is directed to a shape data generation apparatus for receiving a text character string or character codes, and outputting structured font shape data.

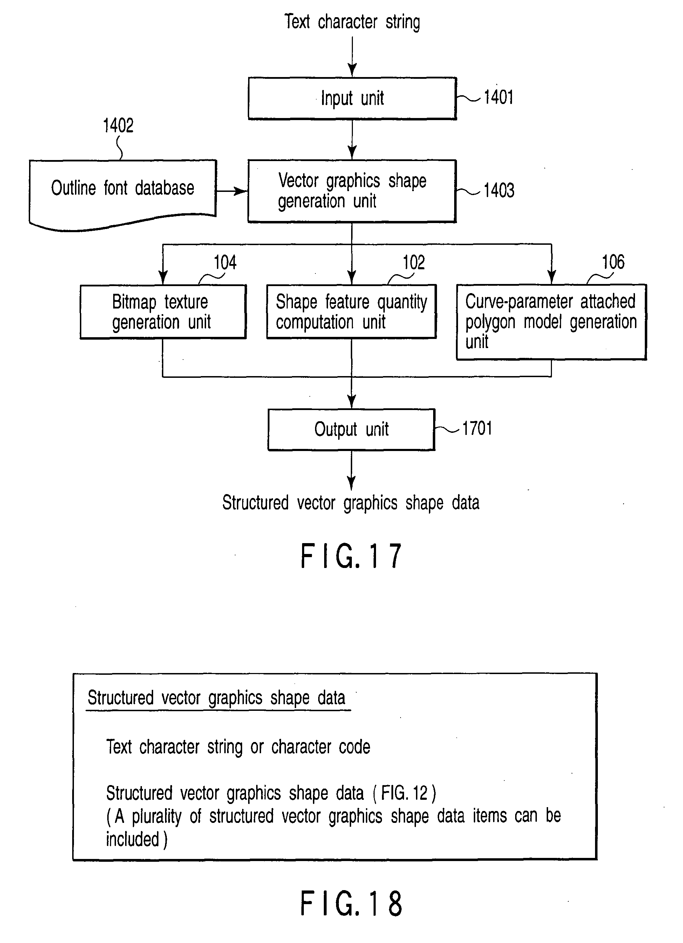

As shown in FIG. 17, the shape data generation apparatus of the fifth embodiment comprises an input unit 1401, outline font database 1402, vector graphics shape generation unit 1403, shape feature quantity computation unit 102, bitmap texture generation unit 104, curve-parameter attached polygon model generation unit 106 and output unit 1701. The fifth embodiment is obtained by replacing the output unit 1001 of the fourth embodiment with the output unit 1701.

The output unit 1701 outputs structured font shape data. As shown in FIG. 18, the structured font shape data comprises structured vector graphics shape data (FIG. 11) and font character string information (text character string or character codes) added thereto.

### <Advantage of the Fifth Embodiment>

Since in the fifth embodiment, each outline font is not defined as a single vector graphics shape, but is defined as structured font shape data corresponding to a character string, a sentence or the entire portion of a paragraph in a document, or a cell in a table can be stored as one data item. For instance, a single program information character string included in an electronic program guide table can be defined as one data item.

### (Sixth Embodiment)

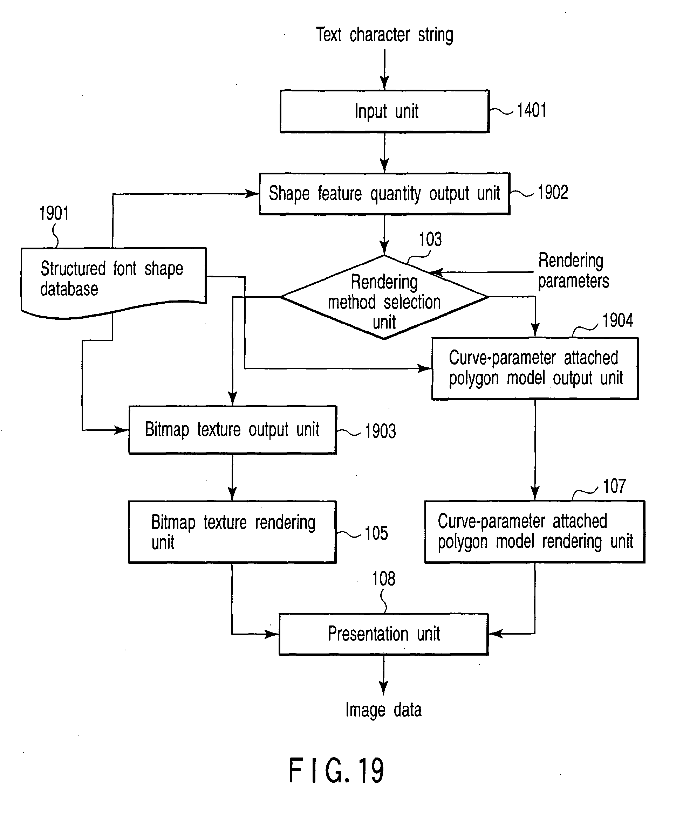

A sixth embodiment is directed to a rendering apparatus for receiving a text character string or character codes, and displaying character shapes. This rendering apparatus is provided for rendering the data output by the fifth embodiment, and will be described with reference to FIG. 19.

As shown in FIG. 19, the rendering apparatus of the sixth embodiment comprises an input unit 1401, structured font shape database 1901, shape feature quantity output unit 1902, bitmap texture output unit 1903, curve-parameter attached polygon model output unit 1904, bitmap texture rendering unit 105, curve-parameter attached polygon model rendering unit 107 and presentation unit 108.

The structured font shape database 1901 accumulates structured font shape data, and outputs a shape feature quantity, bitmap texture data or a curve-parameter attached polygon model included in the structured vector graphics shape data corresponding to a designated text character string or character code, using the text character string or character code as an argument.

The shape feature quantity reading unit 1902 receives, as an argument, the text character string or character code input to the structured font shape database 1901 by the input unit 1401, and reads out the shape feature quantity corresponding to the argument.

The bitmap texture reading unit 1903 receives, as an argument, the text character string or character code input to the structured font shape database 1901 by the input unit 1401, and reads out the bitmap texture data corresponding to the argument.

The curve-parameter attached polygon model reading unit 1904 receives, as an argument, the text character string or character code input to the structured font shape database 1901 by the input unit 1401, and reads out the curve-parameter attached polygon model corresponding to the argument.

### <Advantage of the Sixth Embodiment>

In the sixth embodiment, after the shape data generation apparatus of the fifth embodiment generates structured font shape data corresponding to each grogram information character string included in an electronic program guide table, and the generated data is stored in a database, the program information necessary to display is read from the database and displayed.

### (Seventh Embodiment)

A rendering apparatus of a seventh embodiment is obtained by replacing the shape feature quantity computation unit 102 for computing a shape feature quantity, and the rendering method selection unit 103 utilizing the shape feature quantity, which are employed in the third embodiment, with a character feature quantity computation unit 2001 utilizing the feature quantity of a character itself. Since outline fonts are related to respective characters, the stroke count of each character can be used as a shape feature quantity, instead of the number of intersections between the linear line and outline shown in FIG. 4.

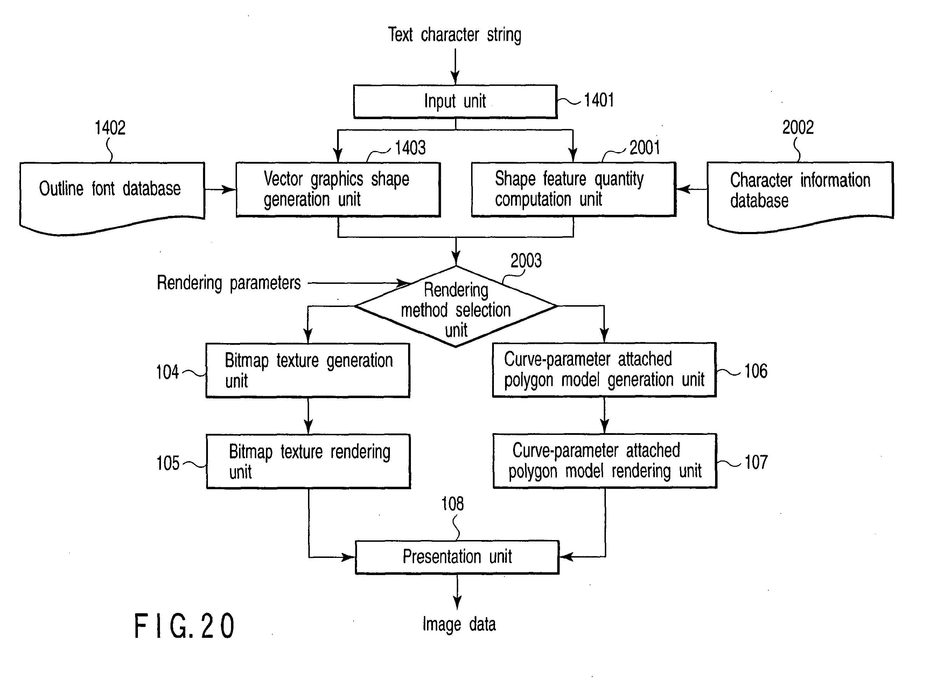

Referring to FIG. 20, the rendering apparatus according to the seventh embodiment will be described.

As shown, the rendering apparatus comprises an input unit 1401, outline font database 1402, vector graphics shape generation unit 1403, character feature quantity computation unit 2001, character information database 2002, rendering method selection unit 2003, bitmap texture generation unit 104, bitmap texture rendering unit 105, curve-parameter attached polygon model generation unit 106, curve-parameter attached polygon model rendering unit 107 and presentation unit 108.

The character feature quantity computation unit 2001 computes the stroke count of the text character string input by the input unit 1001.

The character information database 2002 outputs the stroke count of a character, using a character code corresponding to the character as an argument.

The rendering method selection unit 2003 receives a threshold value set for the stroke count and serving as a rendering parameter, compares each character feature quantity with the threshold value to select a rendering unit.

### <Advantage of the Seventh Embodiment>

In the seventh embodiment, a shape feature quantity related to the actual shape of a character is not computed, but respective stroke counts corresponding to characters are utilized to omit the process of computing shape feature quantities.

In the above embodiments, when the complexity of the shape of each to-be-rendered object is acquired as a shape feature quantity, and the object is rendered in a frame memory with a small number of pixels, the texture rendering method for displaying bitmap texture beforehand produced by rendering,a vector graphics shape in a frame memory with a sufficient capacity is used instead of the polygon model rendering method. This can overcome the problem that rendering is executed such that one pixel contains outlines of polygons, whereby a character hard to make out is produced.

Furthermore, the polygon model rendering method requires a larger number of polygons for rendering and hence costs more than the texture rendering method, although it can provide higher quality display. Accordingly, if the polygon model rendering method is utilized only for certain shapes that require display of high quality, the cost of displaying a large number of vector graphics shapes can be suppressed, thereby enhancing the interactivity.

As a result, a clear image can be rendered with the number of polygons necessary for the rendering reduced.

## Claims

1. A rendering apparatus **characterized by** comprising:
means (101) for inputting vector graphics data;
means (102) for computing a shape feature quantity related to the vector graphics data, the shape feature quantity indicating complexity of a shape represented by the vector graphics data, or indicating complexity of a character represented by the shape of the vector graphics data;
means (103) for acquiring, as a plurality of rendering parameters, a position of the shape on a screen, and a matrix indicating affine transformation to the position;
means (103) for computing number of pixels which are included in a rendering region of the shape, based on the rendering parameters;
first converting means (104) for converting the vector graphics data into bitmap texture data when the number of pixels is smaller than the shape feature quantity;
first rendering means (105) for rendering the bitmap texture data;
second converting means (106) for converting the vector graphics data into polygon model data attached with a curve-parameter when the number of pixels fails to be smaller than the shape feature quantity;
second rendering means (107) for rendering the polygon model data;
means (103) for selecting one of the first converting means and the second converting means and one of the first rendering means and the second rendering means according to the input vector graphics data by comparing the number of pixels with the shape feature quantity; and
means (108) for presenting a selected one of the rendered bitmap texture data and the rendered polygon model data.

2. A shape data generation apparatus **characterized by** comprising:
means (101) for inputting vector graphics data;
means (102) for computing a shape feature quantity related to the vector graphics data, the shape feature quantity indicating complexity of a shape represented by the vector graphics data, or indicating complexity of a character represented by the shape of the vector graphics data;
a first converting means (104) configured to convert the vector graphics data into bitmap texture data;
a second converting means (106) configured to convert the vector graphics data into polygon model data attached with a curve-parameter; and
means (1001) for generating structured shape data by structuring, as one set, the shape feature quantity, the bitmap texture data and the polygon model data.

3. The apparatus according to claim 2, **characterized by** further comprising:
means (1301) for acquiring, as a plurality of rendering parameters, a position of the shape on a screen, and a matrix indicating affine transformation to the position;
means (103) for computing number of pixels which are included in a rendering region of the shape, based on the rendering parameters;
a first rendering means (105) configured to render the bitmap texture data when the number of pixels is smaller than the shape feature quantity;
a second rendering means (107) configured to render the polygon model data when the number of pixels fails to be smaller than the shape feature quantity;
means (103) for selecting one of the first converting means and the second converting means and one of the first rendering means and the second rendering means according to the input vector graphics data by comparing the number of pixels with the shape feature quantity; and
means (108) for presenting a selected one of the rendered bitmap texture data and the rendered polygon model data.

4. A rendering apparatus **characterized by** comprising:
means (1401) for inputting a text character string;
means (1402) for storing character code data and outline font data in relation to each other;
means (1403) for generating vector graphics data as outline font data corresponding to the text character string, referring to the storing means;
means (102) for computing a shape feature quantity related to the vector graphics data, the shape feature quantity indicating complexity of a shape represented by the vector graphics data, or indicating complexity of a character represented by the shape of the vector graphics data;
means (103) for acquiring, as a plurality of rendering parameters, a position of the shape on a screen, and a matrix indicating affine transformation to the position;
means (103) for computing number of pixels which are included in a rendering region of the shape, based on the rendering parameters;
first converting means (104) for converting the vector graphics data into bitmap texture data when the number of pixels is smaller than the shape feature quantity;
first rendering means (105) for rendering the bitmap texture data;
second converting means (106) for converting the vector graphics data into polygon model data attached with a curve-parameter when the number of pixels fails to be smaller than the shape feature quantity;
second rendering means (107) for rendering the polygon model data;
means (103) for selecting a one of the first converting means and the second converting means and one of the first rendering means and the second rendering means according to the vector graphics data by comparing the number of pixels with the shape feature quantity; and
means (108) for presenting a selected one of the rendered bitmap texture data and the rendered polygon model data.

5. A shape data generation apparatus **characterized by** comprising:
means (1401) for inputting a text character string;
means (1402) for storing character code data and outline font data in relation to each other;
means (1403) for generating vector graphics data as the outline font data corresponding to the text character code string, referring to the storing means;
means (102) for computing a shape feature quantity related to the vector graphics data, the shape feature quantity indicating complexity of a shape represented by the vector graphics data, or indicating complexity of a character represented by the shape of the vector graphics data;
first converting means (104) for converting the vector graphics data into bitmap texture data;
second converting means (106) for converting the vector graphics data into polygon model data attached with a curve-parameter; and
means (1001) for generating structured shape data by structuring, as one set, the shape feature quantity, the bitmap texture data and the polygon model data.

6. A shape data generation apparatus
**characterized by** comprising:
means (1401) for inputting a character code;
means (1402) for storing character codes and outline font data items in relation to each other;
first generating means (1403) for generating vector graphics data as outline font data corresponding to the input character code, referring to the storing means;
means (102) for computing a shape feature quantity related to the vector graphics data, the shape feature quantity indicating complexity of a shape represented by the vector graphics data, or indicating complexity of a character represented by the shape of the vector graphics data;
first converting means (104) for converting the vector graphics data into bitmap texture data;
second converting means (106) for converting the vector graphics data into polygon model data attached with a curve-parameter; and
second generating means (1001) for generating structured font shape data by structuring, as one set, the input character code, the shape feature quantity, the bitmap texture data and the polygon model data.

7. The apparatus according to claim 6, **characterized by** further comprising:
font means (1901) for storing structured font shape data generated by the second generating means whenever a character code is input;
means (1902) for acquiring a shape feature quantity of a shape corresponding to the input character code, referring to the font storing means;
means (103) for acquiring, as a plurality of rendering parameters, a position of the shape on a screen, and a matrix indicating affine transformation to the position;
means (103) for computing number of pixels which are included in a rendering region of the shape, based on the rendering parameters;
means (1903) for acquiring bitmap texture data corresponding to the input character code, referring to the font storing means, when the number of pixels is smaller than the shape feature quantity;
first rendering means (105) for rendering the bitmap texture data;
means (1904) for acquiring polygon model data attached with a curve-parameter, the polygon model data corresponding to the input character code, referring to the font storing means, when the number of pixels fails to be smaller than the shape feature quantity;
second rendering means (107) for rendering the polygon model data;
means (103) for selecting one of the first converting means and the second converting means and one of the first rendering means and the second rendering means according to the vector graphics data by comparing the number of pixels with the shape feature quantity; and
means (108) for presenting one of the rendered bitmap texture data and the rendered polygon model data.

8. A rendering method **characterized by** comprising:
inputting vector graphics data;
computing a shape feature quantity related to the vector graphics data, the shape feature quantity indicating complexity of a shape represented by the vector graphics data, or indicating complexity of a character represented by the shape of the vector graphics data;
acquiring, as a plurality of rendering parameters, a position of the shape on a screen, and a matrix indicating affine transformation to the position;
computing number of pixels which are included in a rendering region of the shape, based on the rendering parameters;
preparing a first converting means configured to convert the vector graphics data into bitmap texture data when the number of pixels is smaller than the shape feature quantity;
preparing a first rendering means configured to render the bitmap texture data;
preparing a second converting means configured to convert the vector graphics data into polygon model data attached with a curve-parameter when the number of pixels fails to be smaller than the shape feature quantity;
preparing a second rendering means configured to render the polygon model data;
selecting one of the first converting means and second converting means and one of the first rendering means and the second rendering means according to the input vector graphics data by comparing the number of pixels with the shape feature quantity; and
presenting a selected one of the rendered bitmap texture data and the rendered polygon model data.

9. A shape data generation method **characterized by** comprising:
inputting vector graphics data;
computing a shape feature quantity related to the vector graphics data, the shape feature quantity indicating complexity of a shape represented by the vector graphics data, or indicating complexity of a character represented by the shape of the vector graphics data;
converting the vector graphics data into bitmap texture data;
converting the vector graphics data into polygon model data attached with a curve-parameter; and
generating structured shape data by structuring, as one set, the shape feature quantity, the bitmap texture data and the polygon model data.

10. A rendering method **characterized by** comprising:
inputting a text character string;
preparing a storing means configured to store character code data and outline font data in relation to each other;
generating vector graphics data as outline font data corresponding to the text character string, referring to the storing means;
computing a shape feature quantity related to the vector graphics data, the shape feature quantity indicating complexity of a shape represented by the vector graphics data, or indicating complexity of a character represented by the shape of the vector graphics data;
acquiring, as a plurality of rendering parameters, a position of the shape on a screen, and a matrix indicating affine transformation to the position;
computing number of pixels which are included in a rendering region of the shape, based on the rendering parameters;
preparing a first converting means configured to convert the vector graphics data into bitmap texture data when the number of pixels is smaller than the shape feature quantity;
preparing a first rendering means configured to render the bitmap texture data;
preparing a second converting means configured to convert the vector graphics data into polygon model data attached with a curve-parameter when the number of pixels fails to be smaller than the shape feature quantity;
preparing a second rendering means configured to render the polygon model data;
selecting one of the first converting means and second converting means and one of the first rendering means and the second rendering means according to the vector graphics data by comparing the number of pixels with the shape feature quantity; and
presenting a selected one of the rendered bitmap texture data and the rendered polygon model data.

11. A shape data generation method **characterized by** comprising:
inputting character string data;
preparing a storing means configured to store character code data and outline font data in relation to each other;
generating vector graphics data as the outline font data corresponding to the text character code string, referring to the storing means;
computing a shape feature quantity related to the vector graphics data, the shape feature quantity indicating complexity of a shape represented by the vector graphics data, or indicating complexity of a character represented by the shape of the vector graphics data;
converting the vector graphics data into bitmap texture data;
converting the vector graphics data into polygon model data attached with a curve-parameter; and
generating structured shape data by structuring, as one set, the shape feature quantity, the bitmap texture data and the polygon model data.

12. A shape data generation method **characterized by** comprising:
inputting a character code;
preparing a storing means configured to store character codes and outline font data items in relation to each other;
generating vector graphics data as outline font data corresponding to the input character code, referring to the storing means;
computing a shape feature quantity related to the vector graphics data, the shape feature quantity indicating complexity of a shape represented by the vector graphics data, or indicating complexity of a character represented by the shape of the vector graphics data;
converting the vector graphics data into bitmap texture data;
converting the vector graphics data into polygon model data attached with a curve-parameter; and
generating structured font shape data by structuring, as one set, the input character code, the shape feature quantity, the bitmap texture data and the polygon model data.

13. A program stored in a computer readable medium, **characterized by** comprising:
means (101) for instructing a computer to input vector graphics data;
means (102) for instructing the computer to compute a shape feature quantity related to the vector graphics data, the shape feature quantity indicating complexity of a shape represented by the vector graphics data, or indicating complexity of a character represented by the shape of the vector graphics data;
means (103) for instructing the computer to acquire, as a plurality of rendering parameters, a position of the shape on a screen, and a matrix indicating affine transformation to the position;
means (103) for instructing the computer to compute number of pixels which are included in a rendering region of the shape, based on the rendering parameters;
first conversion means (104) for instructing the computer to convert the vector graphics data into bitmap texture data when the number of pixels is smaller than the shape feature quantity;
first rendering means (105) for instructing the computer to render the bitmap texture data;
second conversion means (106) for instructing the computer to convert the vector graphics data into polygon model data attached with a curve-parameter when the number of pixels fails to be smaller than the shape feature quantity;
second rendering means (107) for instructing the computer to render the polygon model data;
means (103) for instructing the computer to select one of the first conversion means and the second conversion means and one of the first rendering means and the second rendering means according to the input vector graphics data by comparing the number of pixels with the shape feature quantity; and
means (108) for instructing the computer to present a selected one of the rendered bitmap texture data and the rendered polygon model data.

14. A program stored in a computer readable medium, **characterized by** comprising:
means (101) for instructing a computer to input vector graphics data;
means (102) for instructing the computer to compute a shape feature quantity related to the vector graphics data, the shape feature quantity indicating complexity of a shape represented by the vector graphics data, or indicating complexity of a character represented by the shape of the vector graphics data;
means (104) for instructing the computer to convert the vector graphics data into bitmap texture data;
means (106) for instructing the computer to convert the vector graphics data into polygon model data attached with a curve-parameter; and
means (1001) for instructing the computer to generate structured shape data by structuring, as one set, the shape feature quantity, the bitmap texture data and the polygon model data.

15. A program stored in a computer readable medium, **characterized by** comprising:
means (1401) for instructing a computer to input a text character string;
means for instructing the computer to access to a storing means (1402) configured to store character code data and outline font data in relation to each other;
means (1403) for instructing the computer to generate vector graphics data as outline font data corresponding to the text character string, referring to the storing means;
means (102) for instructing the computer to compute a shape feature quantity related to the vector graphics data, the shape feature quantity indicating complexity of a shape represented by the vector graphics data, or indicating complexity of a character represented by the shape of the vector graphics data;
means (103) for instructing the computer to acquire, as a plurality of rendering parameters, a position of the shape on a screen, and a matrix indicating affine transformation to the position;
means (103) for instructing the computer to compute number of pixels which are included in a rendering region of the shape, based on the rendering parameters;
first conversion means (104) for instructing the computer to convert the vector graphics data into bitmap texture data when the number of pixels is smaller than the shape feature quantity;
first rendering means (105) for instructing the computer to render the bitmap texture data;
second conversion means (106) for instructing the computer to convert the vector graphics data into polygon model data attached with a curve-parameter when the number of pixels fails to be smaller than the shape feature quantity;
second rendering means (107) for instructing the computer to render the polygon model data;
means (103) for instructing the computer to select one of the first conversion means and the second conversion means and one of the first rendering means and the second rendering means according to the vector graphics data by comparing the number of pixels with the shape feature quantity; and
means (108) for instructing the computer to present a selected one of the rendered bitmap texture data and the rendered polygon model data.

16. A program stored in a computer readable medium, **characterized by** comprising:
means (1401) for instructing a computer to input a text character string;
means for instructing the computer to access to a storing means (1402) configured to store the character code data and outline font data in relation to each other;
means (1403) for instructing the computer to generate vector graphics data as the outline font data corresponding to the text character code string, referring to the storing means;
means (102) for instructing the computer to compute a shape feature quantity related to the vector graphics data, the shape feature quantity indicating complexity of a shape represented by the vector graphics data, or indicating complexity of a character represented by the shape of the vector graphics data;
means (104) for instructing the computer to convert the vector graphics data into bitmap texture data;
means (106) for instructing the computer to convert the vector graphics data into polygon model data attached with a curve-parameter; and
means (1001) for instructing the computer to generate structured shape data by structuring, as one set, the shape feature quantity, the bitmap texture data and the polygon model data.

17. A program stored in a computer readable medium, **characterized by** comprising:
means (1401) for instructing a computer to input a character code;
means for instructing the computer to access to a storing means (1402) configured to store character codes and outline font data items in relation to each other;
means (1403) for instructing the computer to generate vector graphics data as outline font data corresponding to the input character code, referring to the storing means;
means (102) for instructing the computer to compute a shape feature quantity related to the vector graphics data, the shape feature quantity indicating complexity of a shape represented by the vector graphics data, or indicating complexity of a character represented by the shape of the vector graphics data;
means (104) for instructing the computer to convert the vector graphics data into bitmap texture data;
means (106) for instructing the computer to convert the vector graphics data into polygon model data attached with a curve-parameter; and
means (1001) for instructing the computer to generate structured font shape data by structuring, as one set, the input character code, the shape feature quantity, the bitmap texture data and the polygon model data.
